(19) **Europäisches Patentamt / European Patent Office / Office européen des brevets**

(11) **EP 2 665 230 B1**

(12) **EUROPEAN PATENT SPECIFICATION**

(45) Date of publication and mention
of the grant of the patent:
**18.10.2017 Bulletin 2017/42**

(51) Int Cl.:
***H04L 12/58*** *(2006.01)*

(21) Application number: **13002438.3**

(22) Date of filing: **07.05.2013**

(54) **Method and system for email spam detection, using aggregated historical data set**

Verfahren und System für E-Mail-Spam-Erkennung unter Verwendung eines aggregierten historischen Datensatzes

Procédé et système de détection de spam, utilisant un ensemble de données historiques agrégées

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2012 IL 21978112**

(43) Date of publication of application:
**20.11.2013 Bulletin 2013/47**

(73) Proprietor: **Deutsche Telekom AG**
**53113 Bonn (DE)**

(72) Inventors:
• **Puzis, Rami**
**77487 Ashdod (IL)**

• **Menahem, Eitan**
**3821720 Hadera (IL)**

(74) Representative: **Flaccus, Rolf-Dieter**
**Flaccus · Müller-Wolff**
**Patentanwälte**
**Bussardweg 10**
**50389 Wesseling (DE)**

(56) References cited:
**US-A1- 2004 210 640     US-A1- 2005 076 084**
**US-A1- 2005 114 457**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the Invention

The invention relates to the field of email spam detection. More specifically the invention relates to a method and system for detecting spammers using an aggregated Historical Data Set.

## Background of the Invention

In the recent years a vast majority of the email traffic could be considered spam. Spam emails are mostly sent from the so-called automatic botnets that tend to use dynamic IPs, so that the traditional black listing updating methods could not keep up. By using botnets, spammers create and exploit free webmail accounts or deliver Spam emails directly to victim mailboxes by exploiting computational power and network bandwidth of their hosts and sometimes even user credentials. Many spam mitigation methods are used by email service providers and organizations to protect mail boxes of their customers and employees respectively. There are three main approaches for Spam mitigation: content-based filtering, real-time blacklisting (RBL), and sender reputation mechanisms (SRM).

Content-based filtering (CBF) refers to techniques in which emails body, attached executables, pictures or other files are analyzed and processed for producing some features upon which email classification is made. The emails content is related to the application-level, which is the highest level of the Open Systems Interconnection (OSI) model. Content-based features have a lot of useful information for classification, however, in the perspective of Internet Service Providers (ISP), there are some disadvantages; first, in order to classify incoming emails, each email must pass through a relatively heavy-weighted content-based filter. This means that significant computational resources are wasted on the filtering process, thus making it fairly costly, compared to other approaches, such as real-time blacklisting or sender reputation systems, which will be discussed later. A second disadvantage of CBF evolves from the fact that spammers continuously improve their CBF evading techniques. For example, instead of sending plain textual Spam emails, spammers typically send Spam-images or smarter textual content that obfuscate the unwanted content in normal textual content.

Real-time blacklisting (RBL), is another technique for mitigating the spamming problem. The RBL are IP-based lists that contain IP prefixes, of spamming Mail Transfer Agents (MTA) and are regarded as network-level-based filters. Using the RBL, large firms such as Internet Service Providers (ISP) can filter out the emails that are detected as originated from spamming IPs. The filtering is very fast, since the decision to accept or reject the email neither requires receiving the full email (therefore saving network resources) nor requires processing its content (therefore saving computational resources). In order to avoid misclassification, RBLs must be updated systematically. For example, Spamhaus, Spam-Cop, and SORBS are some initiatives that keep RBL systems updated by tracking and reporting spammers' IPs. RBL methods, however, cannot entirely solve the Spam email problem, as spammers can escape them, for example, by repeatedly changing their IPs by stealing local network IPs, or by temporarily stealing IPs using BGP hijacking attacks [A. Ramachandran and N. Feamster. Understanding the network-level behavior of spammers. In ACM SIGCOMM, Pisa, Italy, 2006]. Another shortcoming of RBL is that whenever an IP prefix is blacklisted, both spammers and benign senders who share the same prefix might be rejected. Benign senders can also be blocked because of inaccurate blacklisting heuristics. In order to lower the false-positive rates blacklisting, heuristics limit their true positive rates by allowing many spam-mails to pass the filter, while blocking mainly repeated spammers. RBL usually has lower accuracy than CBF; this is an acceptable tradeoff given the real-time nature and the low utilization of computational resources of the RBL.

Sender reputation mechanisms (SRM) for Spam mitigation are a collection of methods for computing liability scores of email senders. The computation is usually based on information extracted from the network or from the transport level, from social network information or from other useful identifiers. Sender reputation systems should react quickly to changes in senders' behavioral patterns. More specifically, when a sending pattern of a sender takes a shape of Spammer, his reputation typically decreases. If the reputation of a sender goes below a predefined threshold, the system typically rejects the sender's mails, at least until he gains up some reputation, by changing its sending properties. One of the advantages of sender reputation systems is that they complement and improve RBLs both in terms of detection accuracy and faster response to changes in the sending behavior of potential spammers.

Machine learning algorithms for computing sender reputation from data sets, that are not based on email content analysis, were used in several works in the past. For example, SNARE by Hao et al. [S. Hao, N. A. Syed, N. Feamster, A. G. Gray, and S. Krasser. Detecting spammers with snare: Spatiotemporal network-level automated reputation engine. In 18th USENIX Security Symposium, 2009] is solely based on the network-level and geodesic features, such as distance in IP space to other email senders or the geographic distance between the sender and receiver. Ramachandran et al. [A. Ramachandran, N. Feamster, and S. Vempala. Filtering spam with behavioral blacklisting. In ACM CCS, pages 342-351, 2007], research a different sender reputation and blacklisting approach. They present a new blacklisting system, SpamTracker, to classify email senders based on their sending behavior rather than the MTA's IP addresses. The authors assume that spammers abuse multiple benign MTAs at different times, but their sending patterns tend to remain mostly similar even when shifting from one abused IP to another. SpamTracker extracts network-level features, such as received time, remote IP, targeted domain, whether rejected and uses spectrum clustering algorithms to cluster email servers. The clustering is made on the email destination domains. The authors reported 10.4% True Positive Rate when using SpamTracker on a data set of 620 Spam mails that were missed by the organization filter and eventually where blacklisted in the following weeks.

Sender reputation mechanisms are not limited only to network-level features; reputation can also be learned from a much higher communication level, such as the social network level. The social-network-based filtering approach takes advantage on the natural trust system of social networks. For example if the sender and the receiver belong to the same social group, the communication is assumed to be legitimate. On the other hand, if the sender does not belong to any trustworthy social group, it is more likely to be blacklisted. There are many methods that make a good use of social networks to create both black and white lists. For example J. Balthrop et al. [J. Balthrop, S. Forrest, M. E. J. Newman, and M. M. Williamson. Technological networks and the spread of computer viruses. Science, 304(5670):527-529, 2004], have used email address books to compute a sender trust-degree.

Boykin et al. [P. Boykin and V. Roychowdhury. Leveraging social networks to fight spam. IEEE Computer, 38(4):61-68,2005] uses email-network-based spam-filtering algorithm to automatically create both white and black lists. The authors present an automatic tool for extraction of social networks' features from the email header fields such as From, To, and CC. Then, they constructed a social graph, as can be observed from a single user's perspective. Later, they found a cluster of users which can be regarded as trusted. Finally, they trained a Bayesian classifier on the email addresses in the white and black lists, labeled as normal and Spam-senders respectively. The authors showed that their algorithm has 56% True Positive Rate with the black list and 34% True Positive Rate with the white list. Their method, empirically tested on three data sets of several thousands of emails, did not have any false positives. The downside of the proposed algorithm is that both the black and white lists can be made erroneous. For example, the black list can be fooled by attackers that use spyware to learn the user's frequently used address list, and have one or more of them added to the Spam mail, so that the co-recipients (the spam victims) will look like they belong to the user's social network. The white list can also be fooled by sending spam mail using one or more of the user's friends' accounts. This can be done, for example, if the friend's computer had been compromised by a bot which selectively send spam mails. Golbeck and Hendler [J. Golbeck and J. Hendler. Reputation network analysis for email filtering. In First Conference on Email and Anti-Spam, Mountain View, y'California, USA, 2004] present a supervised collaborative mechanism, TrustMail, for learning reputation networks. The proposed mechanism is aided by users' own scores for email senders. For example, a user can assign a high reputation score to his closest friends, and they in their turn may assign a high reputation rank to their friends. In this way, a reputation network is created. The reputation network may be used as a whitelist, namely as a recommendation system with very low false positive rate, that may allow users to sort their emails by a reputation score.

The Above spam mitigation solutions are mainly focused on the application-layer and the network layer (i.e. content based, sender reputation mechanism, social-network-based, and real-time black-listing (RBL)). Beverly and Sollins [R. Beverly and K. Sollins. Exploiting the transport-level characteristics of am. In 5th Conference on Email and Anti-Spam (CEAS), 2008] investigated the effectiveness of using transport-level features, i.e. round trip time, FIN count, Jitter and several more. The best features were selected using forward fitting to train SVM-based classifier. They reported 90% accuracy.on 60 training examples. However, one of the weaknesses of their method compared to RBL and other reputation mechanisms, is that the emails (both Spam and Ham) must be fully received in order to extract their features, thus making spam mitigation process less effective. Another example of prior art method and system for dynamically filtering and classifying messages is disclosedin patent document US 2005/0076084 A1. IPs of mail senders may change their behavior from time to time. More specifically, a benign IP may change to a spammer IP, and vice versa. Yet, the art has failed to predict a change in the behavior of an IP.

It is an object of the present invention to provide SRM system for creating a blacklist of IPs, which is faster and more accurate than prior art systems.

It is another object of the present invention to provide said SRM system, that can operate in addition to other prior art systems, thereby to increase their accuracy in spam mail determination.

Other objects and advantages of the invention will become apparent as the description proceeds.

## Summary of the Invention

The invention relates to a spam detection system as claimed in appended claims 1 to 4. The invention also relates to a spam detection method as claimed in appended claims 5 to 8.

## Brief Description of the Drawings

In the drawings:

- Fig. 1 schematically shows the HDS flow work based SRM;
- Fig. 2 schematically shows the HDS evaluation environment;

- Fig. 3 schematically shows the effect of the history length;
- Fig. 4 shows a table with an example of an email log;
- Fig. 5 shows a table of infogain ranking of HDS features (n=5, $w_0$=10 min);
- Fig. 6 shows a table of the HDS structure;
- Fig. 7 shows a table with an example of an HDS;
- Fig. 8 shows a table with a summary of the experiment setup;
- Fig. 9 shows a table of dependability on ML classifiers; and
- Fig. 10 shows a table of the effect of history length;
- Fig. 11 schematically shows a system of the prior art;
- Fig. 12 schematically shows one embodiment of the present invention;
- Fig. 13 schematically shows another embodiment of the present invention; and
- Fig 14 schematically shows the error analysis level as a function of time between consequent address-lists updates.

## Detailed Description of Embodiments of the Invention

The present invention provides means for extending the spamming detection capabilities of a typical email provider mail mitigation system. Mail mitigation systems are well known in the art, and are used at mail providers for detecting the IP spammers, and specific emails that are suspected to come from spammers, and prevent them from arriving their destination, as defined by the sender. As noted above, such systems of the prior art are not capable of filtering all the spam emails, and their successful rate is about 90%. However, in view of the vast amount of spam emails, even the remaining 10% is very upsetting. As will be demonstrated, the method and system of the present invention very significantly increases the rate of spam detection at the mail provider, and it performs this task in efficient manner. More specifically, the system of the invention fulfills two tasks, as follows:

(a) Determining the spammingness rate of specific IPs: Based on email logs that are received from the mail provider, the system finds additional spam IPs that have not been detected by the typical spam mitigation means of the provider; and
(b) Determining the erraticness rate of each specific IP: Based on said logs, the system of the invention predicts the possibility that each specific IP will change its behavior within a future predefined period. It is known in the art that a IP addresses may change their behavior time to time, such that a legitimate IP may become spammer, or vice versa. The invention provides means for predicting such change of behaviors at a very high rate, enabling the updating of the IP black list of the service provider in a more flexible accurate manner.

In an embodiment of the invention, the system of the invention is provided as an extension to existing typical spam mitigation system of a mail provider.

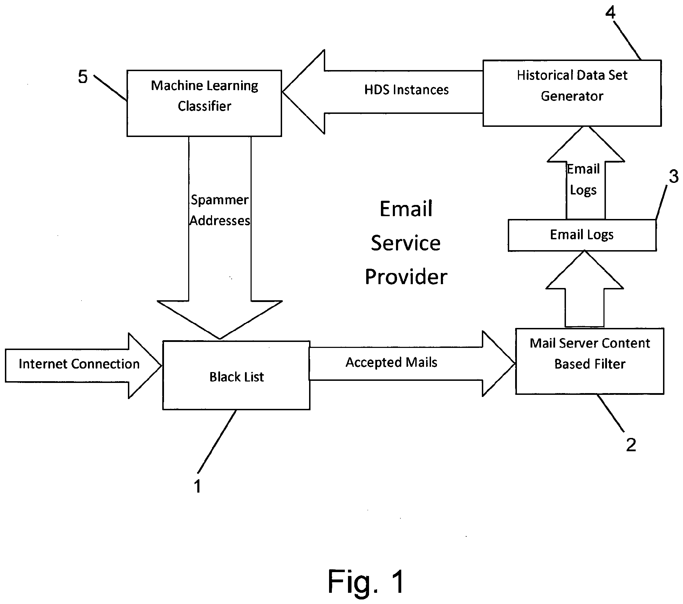

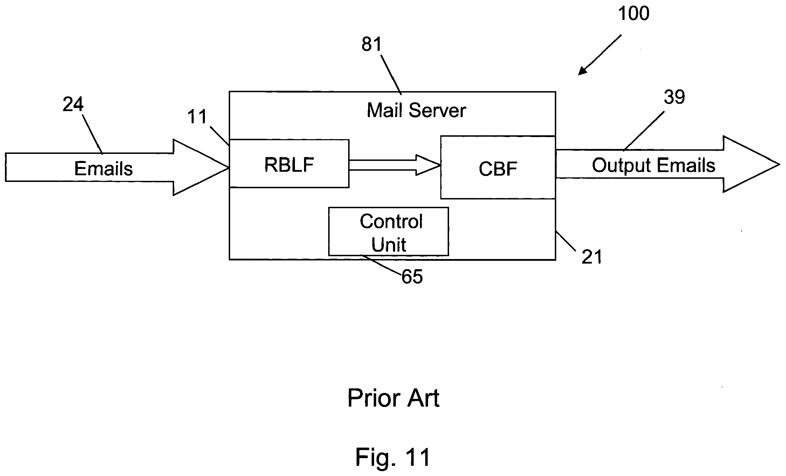

Fig. 11 is a general block diagram which illustrates a typical spam mitigation system 100 of the prior art, as used by mail providers. A stream of a vast number of emails 24 coming from various IP senders is received at mail server 81. The incoming emails are subjected to two types of filters: an RBL filter 11 which comprises a black list of senders IPs, and a content based filter (CBF). The RBL filter 11 (hereinafter RBLF) is prepared in various manners well known in the art, and is updated from time to time. Those emails that pass said RBL filter 11 are subjected to CBF 21. The output emails 39 that pass both the RBLF and the CBF proceed to the respective addressees. Mail server 81 further comprises a control unit 65 that coordinates the various tasks of mail server 81, and it further creates an email log that summarizes selected details that relate to the email traffic passing through the server. Typically, prior art spam mitigation systems such as of Fig. 1 are capable of filtering about 90% of the spam emails. Yet, since a very significant amount of the email traffic is spam, the remaining 10% is still very disturbing.

The present invention significantly increases the rate of spam filtering up to approximately 98%.

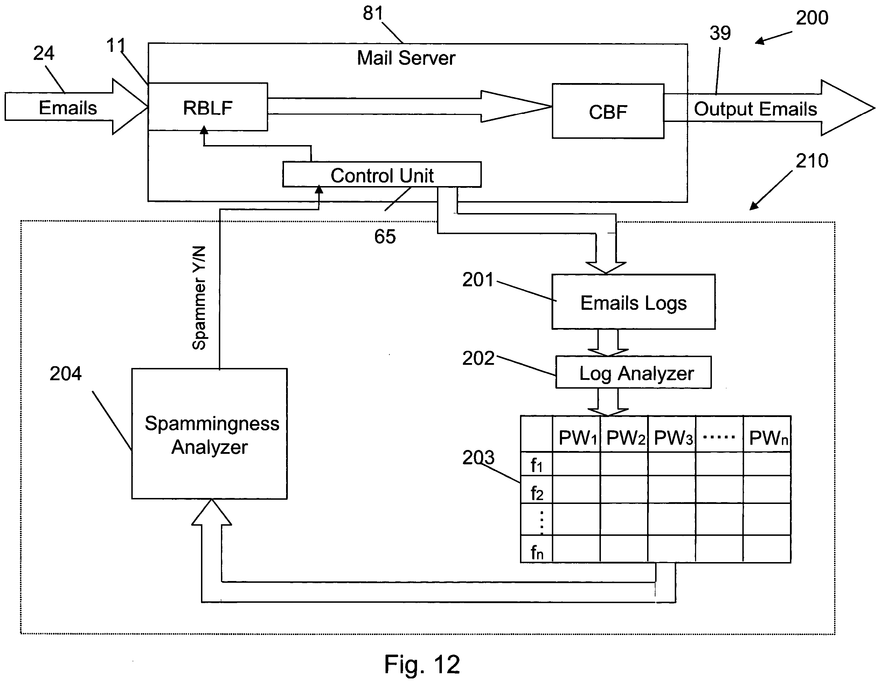

Fig. 12 illustrates in block diagram form the structure of HDS analyzing unit 210, according to an embodiment of the present invention. System 200 is an extension to mail server 81 of Fig. 1, therefore the functionalities of the various units of the mail server will not repeated herein, for the sake of brevity. Emails log 201 is conveyed from time to time from control unit 65 to the HDS analyzing unit 210. The HDS analyzing unit converts the emails log to plurality of exponentially growing Historical Data Sets in terms of time. The HDS analyzing unit 210 comprises a Historical Data Sets (HDS) 203 for each IP which is included in the various email logs. The HDS 203 has essentially a form of a table. The table comprises plurality of predefined features $f_1$ - $f_n$ rows, one row for each predefined feature. The HDS rows are divided to plurality of period windows $PW_1$- $PWn$.

An exemplary list of predefined features that can be used by the invention will be discussed hereinafter. Windows divide the past history into exponentially growing periods. For example, $PW_1$ may represent a 1 hour period, $PW_2$ may represent a 2 hours period, $PW_3$ may represent a 4 hours period, $PW_4$ - 8 hours period, etc. Therefore, feature analysis data relating to newest emails are stored in shorter period windows, features data relating to older emails are stored in longer period windows. As shown, all the emails that come from a specific IP are analyzed with respect to selected features $f_1$ - $f_n$, and, based on their time of arrival, they affect the corresponding period windows $PW_1$ - $PW_n$. The use of exponentially growing windows is very advantageous. First, it has been found by the inventors that older occurrences are less significant to spam determination than newer ones, therefore it is preferable to give a lesser consideration to past emails than to newly arrived ones. However, past events, even those that occurred a relatively long time ago, still have some effect and therefore should be considered. Therefore, it has found by the inventors that giving a same consideration to old and new events involves waste of resources (in terms of memory size and processing time), and could result in reduced accuracy of conclusions, and even wrong conclusions.

The number of period windows should be carefully chosen, in order to obtain the best performance, as will be described hereinafter.

Each received log 201 is scanned and analyzed by log analyzer 202, and the features in each IP record are aggregated and updated with respect to each of their period windows respectively.

The set of features depends on the email provider and the nature of the email logs. For example, the features sets for the period windows may be selected from:

1. The sum, mean, and variance of the number of recipients for each email (NR);
2. the sum, mean, and variance of the number of addressing errors (AE);
3. the sum, mean, and variance of the CBF processing time (PT);
4. the sum, mean, and variance of the SpamClass;
5. the total number of emails sent; and
6. the Erraticness, which is the number of times the sender have changed its behavior from sending spam to sending legitimate emails and vice versa during the period window.

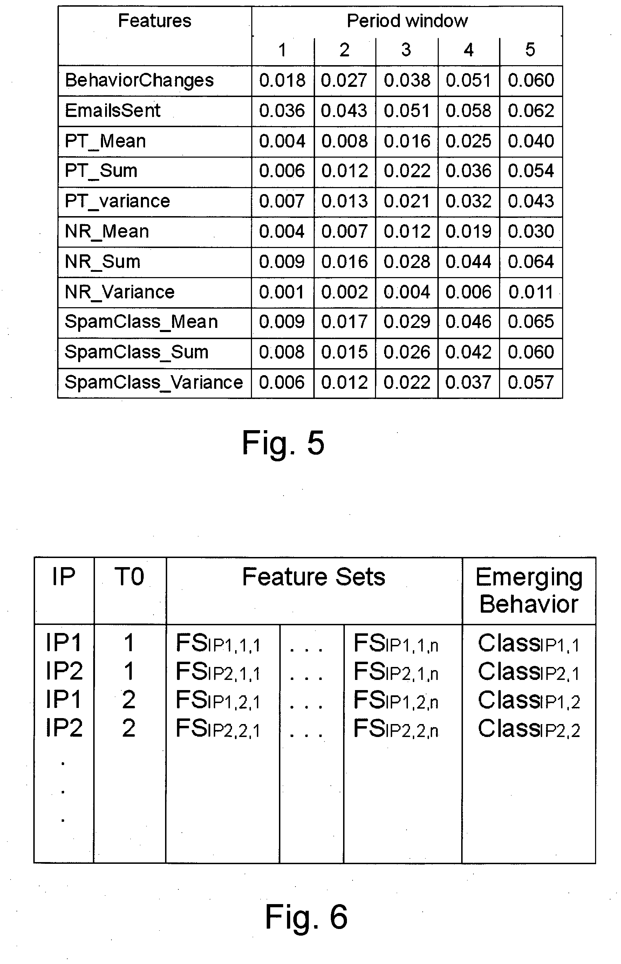

It has been found that Erraticness has a significant role in the classification of senders, as will be further discussed with respect to Fig. 5. The mean of SpamClass is in fact the Spammingness of the IP in the respective period window.

Each historical dataset 203 is analyzed in the Spammingness analyzer 204. The analysis of the HDS 203 values in the Spammingness analyzer 204, provides a conclusion as to whether the specific IP relates to a spammer or not. The conclusion from Spammingness analyzer 204 as to whether the IP relates to a spammer or not is conveyed to control unit 65, which in turn updates the black list of RBLF respectively.

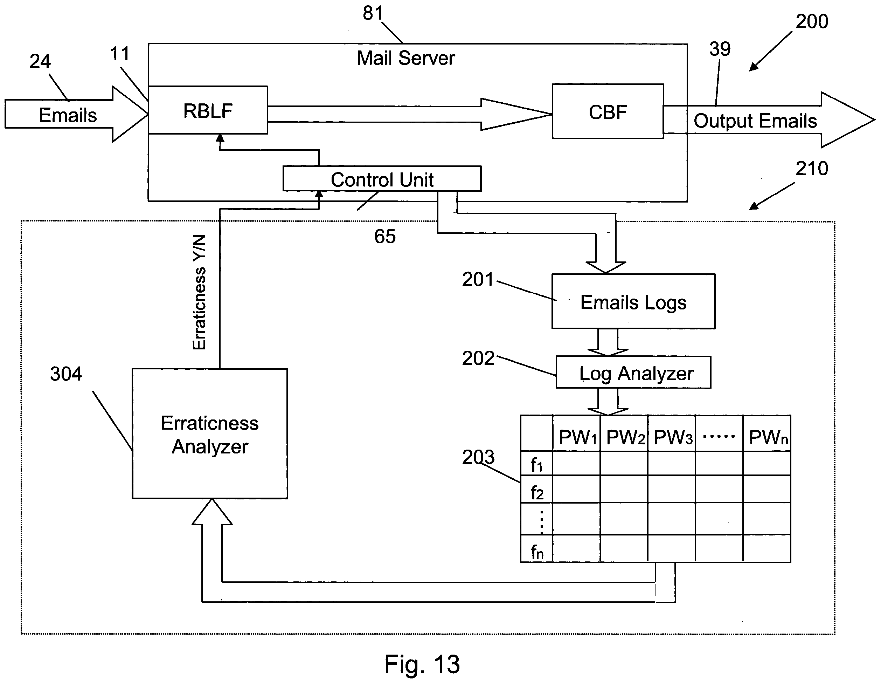

Fig. 13 illustrates in block diagram form the structure of another embodiment of the invention. This embodiment determines Erraticness of the IP, rather than Spammingness as in Fig. 12. All the units of this embodiment are identical to those of Fig. 12, excluding the Erraticness analyzer 304, which is different, and is adapted for determining Erraticness. The Erraticness conclusion as to whether the specific IP is expected to change its behavior in the next predetermined period T is conveyed to control unit 65, which acts accordingly.

In order to train the Spammingness analyzer 204, a target attribute is set out of every HDS record, to be the Spammingness of the IP in a time period following $T_0$.

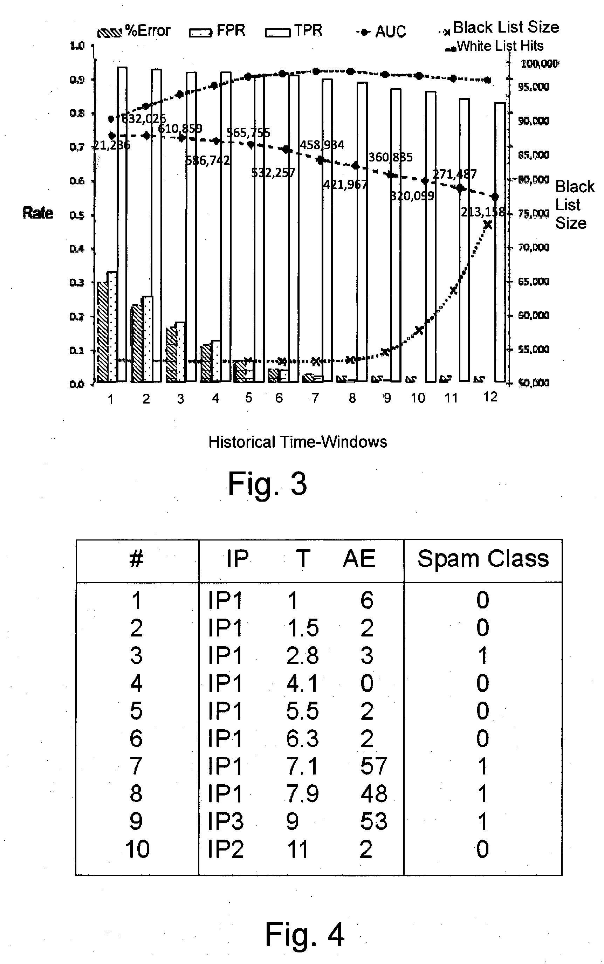

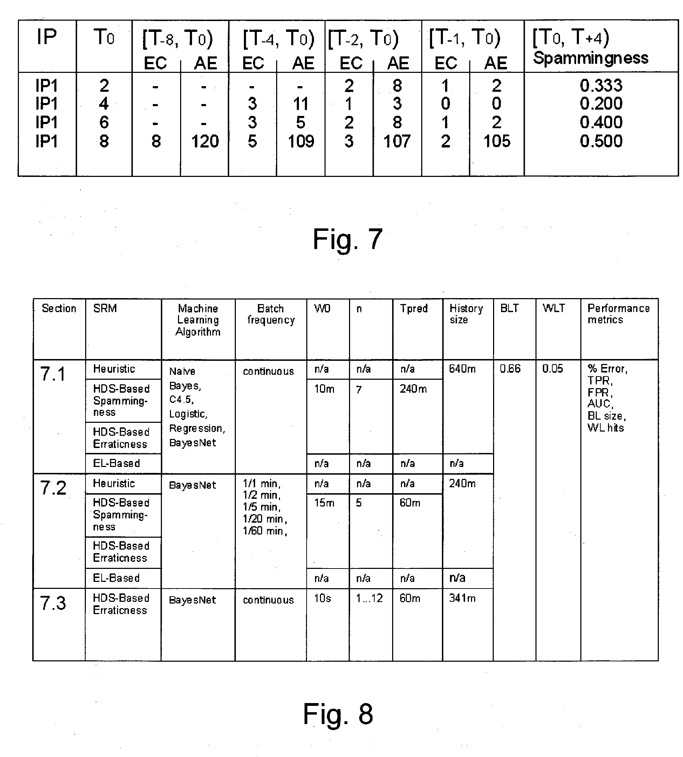

Fig. 4 shows an example of an Email Log records, and Fig. 7 shows an example of historical data set derived from the Email Log in Fig. 4. HDS contains one instance per IP per time unit, where time unit was defined as the size of the smallest period window ($PW_1$). In this example PW1 = 1, the number of feature sets is 4, and the length of the logarithmic period window is 4 (meaning that the length of the period window is 4 time units). Fig. 7 shows two aggregated features that were calculated for each one of the four feature sets: the emails count (EC) and the sum of addressing errors (AE).

In the experiments of the present invention, each feature set contained 11 different features (see Fig. 5). Given the HDS with target attribute set to Spammingness, the Spammingness analyzer 204 (shown in Fig. 12) can be trained in order to predict the future Spammingness of IP addresses. If the predicted Spammingness is higher than a given threshold (e.g. 0.5) the BLT threshold is then applied on Spammingness (i.e. SpamClass mean) in the largest historical period window. Symmetrically, if the predicted Spammingness is lower than the given threshold the WLT is applied to determine whether or not the IP is added to the white-list.

The Erraticness analyzer 304 (shown in Fig. 13) uses a machine learning classifier to predict the stability or Erraticness of an IP behavior in a prediction period window. In order to train the Erraticness analyzer 304, a target attribute is set out of every HDS record to be the Erraticness of the IP in a time period following $T_0$. The Erraticness analyzer 304 trained on this data is used in a slightly different way than the Spammingness analyzer 204 trained to predict the Spammingness of an IP. The difference is mainly in the rule that is used to get to the second part of the black-listing / white-listing decision process: If the Erraticness analyzer 304 predicts an unvarying behavior (Erraticness $<<\varepsilon$), after $T_0$, meaning that the IP is not expected to change its behavior in the nearest future, then the same rule that guided the Spammingness analyzer 204 is applied. First the predicted Erraticness is checked to see whether it is very close to zero, meaning that the IP is not expected to change its behavior in the nearest future. If it is, the same rule that guides the Heuristic-SRM is applied. That is, if the Spammingness of the IP in the largest historical period window, is above the blacklisting threshold BLT, it is blacklisted. Symmetrically if changes in the IP behavior are not predicted and the IP Spammingness is below the whitelisting threshold, it is added to the white-list. Symmetrically, if the Erraticness analyzer 304 predicts no IP behavior changes and the Spammingness value is below the white-listing threshold, the IP is added to the white-list.

The present invention is based on a Historical Data Set (HDS) which aggregates email log records across multiple variable length of historical period windows, in order to create informative statistical records.

For each historical period window, the HDS records contain multiple aggregations of the attributes in the Email Log (EL) data set.

Fig. 6 depicts the historical data set structure. Each HDS record is identified by an IP and a reference time $T_0$, and contains n feature sets.

It is not possible to directly compare Machine Learning models trained on the Email Logs and the HDS data sets. The main difficulty is that the number and the essence of instances in both data sets are different. Each Email Log instance corresponds to a single email, while each HDS instance represents a time period. Therefore, the SRMs described in the present invention were evaluated on a common ground using an evaluation environment designed to simulate black- and white-listing solution.

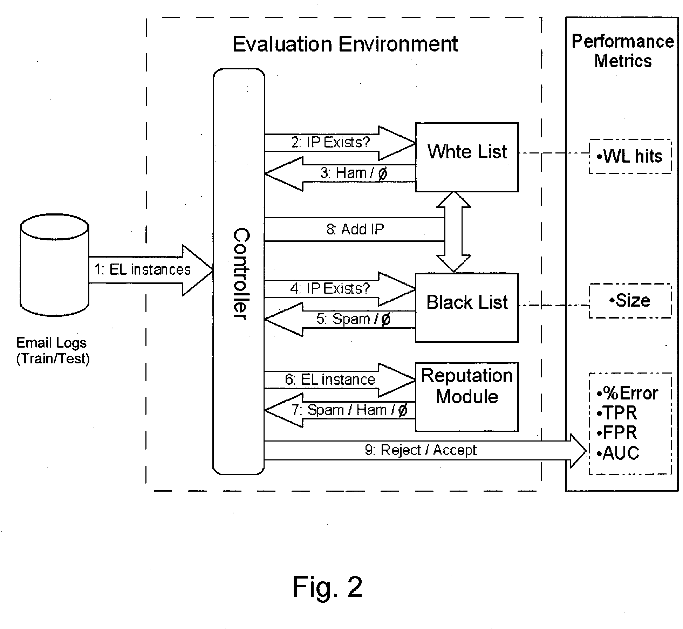

The HDS evaluation environment as shown in Fig. 2, contains four modules: controller, white-list, black-list and a reputation mechanism. The sender IP of every incoming email (i.e. an Email Log instance) is first looked up in the white-list (steps 1, and 2, in Fig. 2). A positive result causes the email to be accepted (steps 3, and 9). Email Logs instances that have been accepted are passed to the SRM (step 6) in order to update the reputation model. Emails arriving from black-listed Mail Transfer Agents (MTAs) are rejected without further processing (steps 4, 5, and 9). If neither the white-list nor the black-list contains the IP, the classification result of the SRM is used to make the final decision and to update the lists if necessary (steps 6, 7, 8, and 9). It should be noted that in case of the HDS-Based and the Heuristic SRMs the emails arriving from blacklisted IPs are ignored as if they have never reached the reputation Mechanism. In contrast to continuous classification where each email received from non blacklisted IP is passed to the SRM, evaluation environment can also operate in a batch mode. In this mode the incoming emails are logged, but the reputation mechanism is activated once in a predefined time period. After processing the logged emails the SRM returns to the controller two sets of addresses. One set contains the addresses that should be blacklisted and the other contains the addresses that should be whitelisted. Each set can be empty.

In order to evaluate the Sender Reputation Mechanisms (SRM) in the present invention, the following performance metrics were used: classification error rate, TPR (true positive rate), FPR (false positive rate), area under the ROC (Receiver Operating Characteristic) curve and black-list size and number of white-list hits. These performance metrics provide enough information to assess how well the HDS-Based SRM could be used to both reduce load from mail servers, and reduce the number of potential customer complaints. Classification error rate is the rate of incorrect predictions made by a classifier and is computed by the following equation:

$$Error = \frac{FP + FN}{TP + TN + FP + FN}$$

where TP, TN, FP and FN stand for the number of true positive, true negative, false positive, and false negative rejections of emails respectively. The Area Under the ROC Curve (AUC) measured in the evaluation process was used. The ROC curve is a graph produced by plotting the true positive rate (TPR = TP = (TP + FN)) versus the false positive rate (FPR = FP = (FP +TN)). The AUC value of the best possible classifier will be equal to unity. This would imply that it is possible to configure the classifier so that it will have 0% false positive and 100% true positive classifications. The worst possible binary classifier (obtained by flipping a coin for example) has AUC of 0.5. AUC is considered as an objective performance metric as it does not depend on the specific discrimination threshold used by a classifier. Black list size is the number of IPs added to the black list during each experiment execution. Black list size affects mainly on the IP lookup time and on the amount of computational resources spent on its maintenance. Faster lookup times mean less delay in email delivery while the computational resources required to maintain the black-list directly translate into cost. The number of white-list hits is an indication to the number of emails that were delivered without content inspection. Higher number of white-list hits means less computational resources spent on spam filtering.

In order to assess the effectiveness of the Erraticness analyzer 304 , the Spammingness analyzer 204, EL-Based, and Heuristic SRMs, they were implemented within WEKA machine-learning framework. The evaluation environment presented in Fig. 2, was also implemented within WEKA as a special classifier that uses the SRMs to update the black and white-lists. The training of the EL-Based and HDS-Based sender reputation algorithms was made using cross validation process. The data sets were ordered by date to preserve the order in which the emails were received. The EL data set was partitioned into training-set and test-set (50% to each). The same cross-validation procedure was applied to all tested settings, shown in Fig. 8. The blacklisting threshold BLT and the whitelisting threshold WLT, are parameters of the evaluation environment. In the following experiments these two thresholds were fixed and equal for all SRMs. The value of BLT and WLT were empirically chosen to be 0:66 and 0:05 respectively. These values assure low false positive rates while resulting in relatively high true positive rates. Both the black- and the white-lists were empty in the beginning of the experiments, and the address lists were constructed from scratch.

The Erraticness analyzer 304, the Spammingness analyzer 204 and the Heuristic SRMs evaluated in the present invention are based on machine learning algorithms. The classification performance on many real life problems is sensitive to the particular machine learning algorithm that is applied. In the first experiment the sensitivity to the choice of machine learning algorithm of the HDS-Based and EL-Based SRM was evaluated. Four algorithms from different families were used to train the two HDS-Based and one EL-Based classifiers. The algorithms were: Naive Bayes (Bayes), C4.5 (Decision Trees), Logistic Regression (Function), and BayesNet (Bayes).

In this experiment the evaluation environment had simulated continuous IP classification where each email delivered from IP that does not exist neither in black-list nor in white list is classified by the SRM. The HDS instances were generated using the following parameters: PW1 = 10 minutes, the number of feature sets is n = 7, and the length of the period window is $T_{Pred}$ = 240 minutes. The total history length is:

$$\Delta T = PW1 \cdot 2^{(n-1)} = 640 \text{ minutes}$$

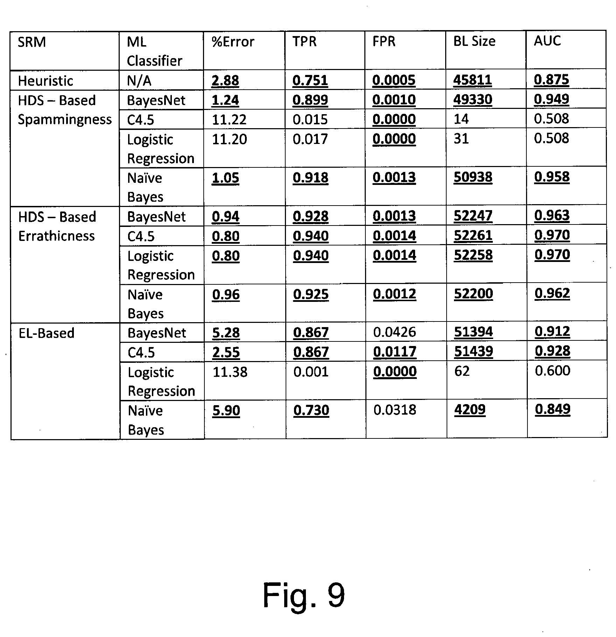

Fig. 9 presents the results of this experiment. The Heuristic SRM was also applied as a baseline for comparison to other techniques. The period window used by the Spammingness analyzer 204 for computing the Spammingness of IP addresses was set to 640 minutes. The blacklisting and the whitelisting threshold were set to BLT = 0:66 and WLT = 0:05 respectively for all SRMs. From Fig. 9 it can be seen that both the Spammingness analyzer 204, that tries to predict the IP Spammingness and the EL-Based SRM are susceptible to incorrect choice of the machine learning algorithm. Logistic Regression had produced poor classifiers for both SRMs. Moreover, the Spammingness analyzer 204 did not perform well even with the commonly used C4.5 algorithm. In all three cases the algorithms had blacklisted very few IP addresses and produced very poor AUC value. In contrast, the Erraticness analyzer 304 performed well with all machine learning algorithms. Overall, if we consider only the machine learning algorithms that did not fail the SRM, It can be seen that the Erraticness analyzer 304 had the lowest percent of errors and the highest AUC and TPR values. The Spammingness analyzer 204 is the second best based on these metrics. It is a noticeable fact that the very simple Heuristic SRM had lower percent of errors compared to the EL-Based SRM that was augmented by machine learning algorithm. Both the Heuristic SRM and the EL-based SRM roughly match the reported performance of state-of-the-art.

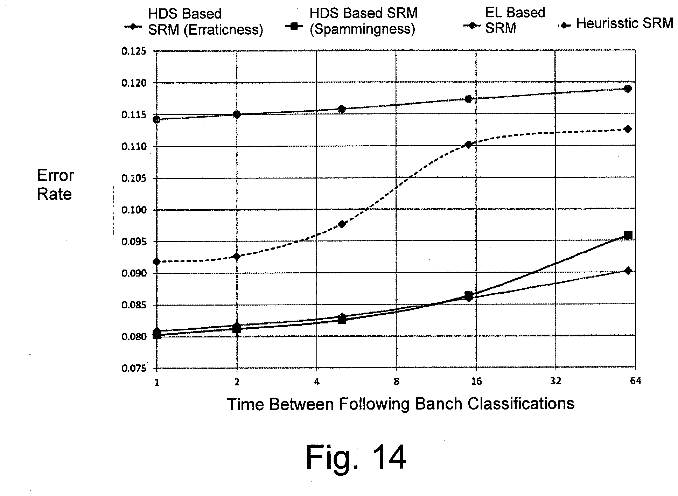

Continuous classification mode where the sender reputation is computed each time that a new email is received may not be realistic due to relatively high resource consumption of machine learning based classifiers compared to black-list data structures. In addition this would place the classifier in the critical path and turn it into a bottleneck in the process of handling incoming emails. Also, most black-lists are optimized for fast information retrieval, but do not tolerate frequent updates. Updating the black-list data structure may be a very expensive operation in terms of computational resources. It is therefore a good practice to minimize the number of updates and to make them as infrequent as possible. In practice SRM can be activated once in a while in order to save computational resources. The payoff for periodic activation of SRM is a window of opportunity during which spammers that are not yet blacklisted can send large amounts of spam without being blocked. In order to investigate the impact of black- and white-lists update frequency on the accuracy of spam filtering the reputation mechanisms was executed in a batch mode with various update frequencies. The SRMs were executed each k minutes where k was set to 1, 2, 5, 20, or 60 minutes. HDS parameters are: PW1 = 15 minutes, the number of feature sets is n = 5, and the length of the period window is $T_{Pred}$ = 60 minutes. In this experiment the BayesNet algorithm was used to train classifiers for both HDS-Based SRMs and for the EL-Based SRM. Although, Heuristic SRM has the lowest false positive rate, its true positive rate is also significantly lower than the true positive rate of other SRMs. Blacklist updated by EL-Based SRM performs the most false rejects and this number does not depend on the frequency of the updates. Nevertheless, the AUC value of EL-Based SRM matches the AUC value of HDS-Based Spammingness analyzer when the address-lists are updated once in an hour. Overall, the two methods that highly depend on Spammingness (i.e. Heuristic SRM and HDS-Based Spammingness analyzer) are sensitive to reduction in the address-lists update frequency. This sensitivity is amplified in the Heuristic SRM where the true positive rate drops by a factor of three when the address-lists update frequency reduces from once in five minutes to once in twenty minutes. The performance of the EL-Based SRM and of the HDS-Based-Erraticness analyzer gradually decays as the time between consequent updates increases as can be seen, for example, in Fig. 14.

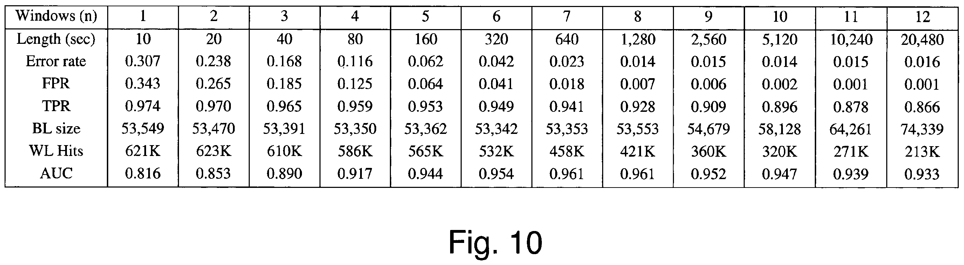

The evidence presented above, suggests that aggregating sender Mail Transfer Agent behavior over time is worthwhile, yielding good classification models. The models created from the HDS when trying to predict the Erraticness of IP addresses are the least sensitive to both the choice of the machine learning algorithm, and to the frequency of address-lists updates. Therefore an attention is given to the HDS-BasedErraticness analyzer investigating its performance as the function of the number of period windows used to construct the HDS. A comparison as made between multiple models of the HDS-BasedErraticness analyzer trained on different HDS train sets, which were constructed from one to twelve period windows. The models were induced by BayesNet algorithm on HDS instances, generated for every incoming email using: PW1 = 10 seconds, number of feature sets n = 1; : : : ; 12 and the length of the period window $T_{Pred}$ = 30 minutes. The experiment shows mixed trends in classification performance as function of the number of historical period windows. The results presented in Fig. 3 and Fig. 10 show that up to nine period windows longer history results in improved performance of HDS-Based SRMs. When using more than nine historical period windows the AUC values slightly decrease indicating a change of trend. TPR and FPR values continuously decrease when adding more period windows to the data set. Due to the very small initial historical period window (i.e. only 10 seconds) the decrease in false positive rate can be noted as more period windows are used. Surprisingly, the true positive rate also gradually decreases as the number of historical period windows grows. It can be explained by the growing number of features that add additional dimensions to the machine-learning problems, until eventually it becomes too complex to learn from (a.k.a. "the course of dimensionality"). The blacklist size, however, stays almost constant until the HDS includes eight time-windows. After this point each additional period window significantly increases the blacklist size. It can be noted that the blacklist size inflation has no significant effect on the TPR or on the FPR and the error rate. In this case the black-list size can be considered as a negative effect as it does not increase the TPR but do increase the computational resources required for handling it. Overall, as more history windows are added (up to the 8th) the FPR decreases quicker than the TPR resulting only in positive effects: the error rate decays while the AUC increases and the blacklist size is stable. After the 8th period window the error rate and the AUC are roughly stable however the black-list size increases. These results suggest that the number of period windows should be chosen with care considering various performance metrics. In our case for example the HDS constructed using eight period windows benefits from low false positive rate

Experiment results presented above show that on one hand, aggregating behavior of Mail Transfer Agents results in better classification. The same machine learning algorithms applied on HDS produce much more accurate models than if applied on the un-aggregated data extracted from the raw email logs. The best results were obtained using HDS-BasedErraticness analyzer with seven period windows: AUC 0.97, TPR 94%, and FPR 0.14%. To the best of our knowledge these results are better than of previously reported SRM evaluated on data sets of similar scale. In fact the accuracy of HDS based SRMs gets closer to the accuracy of content-based filtering. Another interesting fact is that HDS-based SRM blacklisted roughly the same number of IPs as EL-based SRM, while inflicting, by far, fewer false classifications.

Some related works (e.g. Hao et al.) reported roughly the same performance as the Email Log-Based SRM described herein above. In Hao et al. and in the present invention, both classifiers are using features describing a single email sending event. Despite the differences in the particular features used it is believed that aggregations over multiple period windows can boost performance of sender reputation mechanisms based on statistical learning. Future research on HDS should involve various data sets from other domains. Computing the reputation of a sender, for example using HDS-based SRM, is a computationally intensive task both due to the construction of HDS records and classification using machine learning models. HDS construction could be optimized by using past HDS records to compute the aggregated features of a new one. However, classification using machine learning models would remain a bottleneck that may prevent frequent execution of the SRM. In the second experiment the impact of periodical execution of SRM on its accuracy was studied. The results show clear tradeoff between the batch size and the accuracy of spam filtering. Less frequent execution of SRM results in less accurate blacklisting as expected. The main reason for inefficient blacklisting when sender reputation is computed once in a long time period is the tendency of spamming bots to send a number of spam emails during a very short time period and go silent afterwards. The observed deficiency of periodical activation of the evaluated SRMs could also be explained by reduced marginal benefit compared to the email service provider's own SRM that is activated once in a while. The results show that in general the longer history is used, the better classification model is produced. However increasing the number of period windows (and hence the number of features) above a certain point have resulted in blown up blacklist size and a moderate reduction in the AUC due the "course of dimensionality" effect. In order to capture more history length with less period windows the size of the smallest period window $PW_1$ could be increased. Unfortunately, in this case the most recent behavior of the MTAs would be diluted and damage the ability of the HDS-based SRM to respond to sudden behavior changes. "The course of dimensionality" phenomenon can also be tackled by selecting the most informative features.

Although embodiments of the invention have been described by way of illustration, it will be understood that the invention may be carried out with many variations, modifications, and adaptations, without exceeding the scope of the claims.

**Claims**

1. A spam detection system, which comprises:

   a mail server (81) which comprises:

   - one or more "legitimate or malicious" address lists, each address list categorizes originating addresses of emails as either legitimate or malicious;
   - a Content Based Filter and analyzer for content analyzing each incoming email based on its content, for forwarding to respective addressees only emails that pass said analysis, and for further updating said "legitimate or malicious" address lists based on the results of said content analysis; and
- means for producing an email log and for conveying the same to a Historical Data Set, HDS, analyzing un it (210);

a HDS analyzing unit (210) for:

i. receiving said email log from said mail server (81) ;
ii. converting said email log to a plurality of windows durations of Historical Data Sets (203), said windows divide the past history into exponentially increased periods, respectively, wherein features data relating to newest emails are stored in shorter period windows, and features data relating to older emails are stored in longer period windows;
iii. for each originating address in said emails log, analyzing said windows of the Historical Data Sets (203), and determining whether said originating address introduces a potential danger to the computer system of the respective email addressee; and
iv. conveying a summary of said Historical Data Sets analysis to said email server (81), for optionally updating said "legitimate or malicious" lists.

2. System according to claim 1, wherein said results of said Historical Data Sets analysis by the HDS unit (210) are based on determination of a level of spammingness for each originating address.

3. System according to claim 1, wherein said results of the Historical Data Sets analysis are based on a determination of a level of erraticness for each originating address.

4. System according to claim 3, wherein said determination of the level of erraticness relates to prediction of a possible future change in a behavior of a specific originating address.

5. Method for spam detection, which comprises the steps of:

at a mail server (81) :

- producing one or more "legitimate or malicious" address lists, categorizing each originating address as either legitimate or malicious;
- performing a Content Based Filtering and analyzing with respect to each incoming email based on its content, and forwarding to the respective addressees only emails that pass said analysis, and further updating said "legitimate or malicious" address lists based on the results of said content analysis; and
- conveying an email log to a Historical Data Set (HDS) analyzing unit;

(210) at a HDS analyzing unit (210) :

- receiving at said HDS analyzing unit (210) said email log from said mail server (81) ;
- converting said email log to a plurality of windows durations of Historical Data Sets, said windows divide the past history into exponentially increased periods, respectively, wherein features data relating to newest emails are stored in shorter period windows, and features data relating to older emails are stored in longer period windows;
- for each originating address in said log, analyzing the windows of the Historical Data Sets (203) , and determining whether each originating address respectively introduces a potential danger to the computer system of the email addressee; and
- conveying a summary of said Historical Data Sets analysis to said email server (81), for optionally updating said "legitimate or malicious" lists.

6. A method according to claim 5, wherein said results of said Historical Data Sets analysis are based on determination of a level of spammingness for each originating address.

7. A method according to claim 5, wherein said results of the Historical Data Sets analysis are based on a determination of a level of erraticness for each originating address.

8. A method according to claim 5, wherein said determination of the level of erraticness relates to a prediction of a possible future change of a behavior of a specific originating address.

**Patentansprüche**

1. Spam-Erkennungssystem, umfassend:

einen Mailserver (81), welcher umfasst:

- eine oder mehrere "Legitim-oder-böswillig"-Adresslisten, wobei jede Adressliste Absenderadressen von E-Mails als entweder legitim oder böswillig kategorisiert,
- einen inhaltsbasierten Filter und Analysator für die Inhaltsanalyse jeder eingehenden E-Mail basierend auf deren Inhalt, zur Weiterleitung nur derjenigen E-Mails an die jeweiligen Adressaten, die die Analyse bestehen, und zur weiteren Aktualisierung der "Legitim-oder-böswillig"-Adresslisten basierend auf den Ergebnissen der Inhaltsanalyse, und

- Mittel zur Erzeugung einer E-Mail-Logdatei und zum Übertragen derselben an eine Analyseeinheit (210) für historische Datasets (HDS);

eine HDS-Analyseeinheit (210) für das:

i. Empfangen der E-Mail-Logdatei von dem MailServer (81);

ii. Umwandeln der E-Mail-Logdatei in eine Vielzahl von Fenster-Zeitdauern historischer Datasets (203),

wobei die Fenster die vergangene Historie jeweils in exponentiell wachsende Perioden aufteilen, wobei Merkmalsdaten, die jüngste E-Mails betreffen, in Fenstern mit kürzeren Perioden gespeichert werden und Merkmalsdaten, die ältere E-Mails betreffen, in Fenstern mit längeren Perioden gespeichert werden,

iii. für jede Absenderadresse in der E-Mail-Logdatei: Analysieren der Fenster der historischen Datasets (203)

und Bestimmen, ob

die Absenderadresse eine potentielle Gefahr für das Computersystem des jeweiligen E-Mail-Adressaten einführt, und

iv. Übermitteln einer Zusammenfassung der Analyse historischer Datasets an den E-Mailserver (81), zur optionalen Aktualisierung der "Legitim-oder-böswillig"-Listen.

2. System nach Anspruch 1, bei dem die Ergebnisse der Analyse der historischen Datasets durch die HDS-Einheit (210) auf der Bestimmung eines Grades der Spammigkeit für jede Absenderadresse basieren.

3. System nach Anspruch 1, bei dem die Ergebnisse der Analyse der historischen Datasets auf einer Bestimmung des Grades der Unregelmäßigkeit für jede Absenderadresse basieren.

4. System nach Anspruch 3, bei dem die Bestimmung des Grades der Unregelmäßigkeit die Vorhersage einer möglichen künftigen Änderung des Verhaltens einer bestimmten Absenderadresse betrifft.

5. Verfahren zur Spam-Erkennung, welches die folgenden Schritte umfasst:

an einem Mailserver (81):

- Erzeugen einer oder mehrerer "Legitim-oder-böswillig"-Adresslisten, Kategorisieren jeder Absenderadresse als entweder legitim oder böswillig,

- Durchführen einer inhaltsbasierten Filterung und Analyse in Bezug auf jede eingehende E-Mail basierend auf deren Inhalt, und Weiterleiten nur derjenigen E-Mails an die jeweiligen Adressaten, die die Analyse bestehen, und weiteres Aktualisieren der "Legitim-oder-böswillig"-Adresslisten basierend auf den Ergebnissen der Inhaltsanalyse, und

- Übertragen einer E-Mail-Logdatei an eine Analyseeinheit (210) für historische Datasets (HDS),

an einer HDS-Analyseeinheit (210):

- Empfangen der E-Mail-Logdatei von dem Mailserver (81) an der HDS-Analyseeinheit (210),

- Umwandeln der E-Mail-Logdatei in eine Vielzahl von Fenster-Zeitdauern historischer Datasets, wobei die Fenster die vergangene Historie jeweils in exponentiell wachsende Perioden aufteilen, wobei Merkmalsdaten, die jüngste E-Mails betreffen, in Fenstern mit kürzeren Perioden gespeichert werden und Merkmalsdaten, die ältere E-Mails betreffen, in Fenstern mit längeren Perioden gespeichert werden,

- für jede Absenderadresse in der Logdatei: Analysieren der Fenster der historischen Datasets (203)

und Bestimmen,

ob jede einzelne Absenderadresse jeweils eine potentielle Gefahr für das Computersystem des E-Mail-Adressaten einführt, und

- Übermitteln einer Zusammenfassung der Analyse der historischen Datasets an den Mailserver (81),

zur optionalen Aktualisierung der "Legitim-oder-böswillig"-Listen.

6. Verfahren nach Anspruch 5, wobei die Ergebnisse der Analyse der historischen Datasets auf der Bestimmung eines Grades der Spammigkeit für jede Absenderadresse basieren.

7. Verfahren nach Anspruch 5, wobei die Ergebnisse der Analyse der historischen Datasets auf einer Bestimmung eines Grades der Unregelmäßigkeit für jede Absenderadresse basieren.

8. Verfahren nach Anspruch 5, wobei die Bestimmung des Grades der Unregelmäßigkeit die Vorhersage einer möglichen künftigen Änderung eines Verhaltens einer bestimmten Absenderadresse betrifft.

## Revendications

1. Un système de détection de courrier électronique indésirable, qui comprend :

un serveur de courrier électronique (81) qui comprend :

- une ou plusieurs listes d'adresses "légitimes ou malveillantes", chaque liste d'adresses catégorisant des adresses de provenance de messages électroniques comme étant soit légitimes ou malveillantes,
- un filtre basé sur le contenu et un analyseur destiné à une analyse du contenu de chaque message électronique entrant en fonction de son contenu, à la transmission vers des destinataires respectifs d'uniquement les messages électroniques qui passent avec succès ladite analyse, et à une actualisation complémentaire desdites listes d'adresses "légitimes ou malveillantes" en fonction des résultats de ladite analyse de contenu, et,
- un moyen de production d'un journal de courrier électronique et d'acheminement de celui-ci vers une unité d'analyse d'ensemble de données d'historique, HDS, (210)

une unité d'analyse d'HDS (210) destinée à :

i. la réception dudit journal de courrier électronique à partir dudit serveur de courrier électronique (81),
ii. la conversion dudit journal de courrier électronique en une pluralité de durées de fenêtres d'ensembles de données d'historique (203), lesdites fenêtres divisant l'historique passé en périodes à croissance exponentielle respectivement, les données de caractéristiques se rapportant à des messages électroniques les plus récents étant conservées en mémoire dans des fenêtres à périodes plus courtes et les données de caractéristiques se rapportant à des messages électroniques plus anciens étant conservées en mémoire dans des fenêtres à périodes plus longues,
iii. pour chaque adresse d'origine dans ledit journal de courrier électronique, l'analyse desdites fenêtres des ensembles de données d'historique (203), et la détermination si ladite adresse d'origine introduit un danger potentiel pour le système informatique du destinataire de courrier électronique respectif, et
iv. l'acheminement d'un résumé de ladite analyse d'ensembles de données d'historique audit serveur de courrier électronique (81) de façon à éventuellement actualiser lesdites listes "légitimes ou malveillantes".

2. Le système selon la revendication 1, dans lequel lesdits résultats de ladite analyse d'ensembles de données d'historique par ladite unité HDS (210) sont basés sur la détermination d'un niveau de potentialité de courrier indésirable pour chaque adresse d'origine.

3. Le système selon la revendication 1, dans lequel lesdits résultats de l'analyse d'ensembles de données d'historique sont basés sur une détermination d'un niveau de caractère erratique de chaque adresse d'origine.

4. Le système selon la revendication 3, dans lequel ladite détermination du niveau de caractère erratique porte sur une prédiction d'une modification future possible dans un comportement d'une adresse d'origine spécifique.

5. Un procédé de détection de courrier indésirable, qui comprend les étapes suivantes :

au niveau d'un serveur de courrier électronique (81) :

- la production d'une ou de plusieurs listes d'adresses "légitimes ou malveillantes", qui catégorisent chaque adresse d'origine comme étant soit légitime ou malveillante,
- l'exécution d'un filtrage basé sur le contenu et d'une analyse relative à chaque message électronique entrant en fonction de son contenu, et la transmission vers les destinataires respectifs d'uniquement les messages électroniques qui passent avec succès ladite analyse, et l'actualisation complémentaire desdites listes d'adresses "légitimes ou malveillantes" en fonction des résultats de ladite analyse de contenu, et
- l'acheminement d'un journal de courrier électronique à une unité d'analyse d'ensemble de données d'historique (HDS) (210),

au niveau d'une unité d'analyse d'HDS (210) :

- la réception au niveau de ladite unité d'analyse d'HDS (210) dudit journal de courrier électronique à partir dudit serveur de courrier électronique (81),

- la conversion dudit journal de courrier électronique en une pluralité de durées de fenêtres d'ensembles de données d'historique, lesdites fenêtres divisant l'historique passé en périodes à croissance exponentielle respectivement, les données de caractéristiques se rapportant à des messages électroniques les plus récents étant conservées en mémoire dans des fenêtres à périodes plus courtes et les données de caractéristiques se rapportant à des messages électroniques plus anciens étant conservées en mémoire dans des fenêtres à périodes plus longues,

- pour chaque adresse d'origine dans ledit journal, l'analyse des fenêtres des ensembles de données d'historique (203), et la détermination si chaque adresse d'origine introduit respectivement un danger potentiel dans le système informatique du destinataire de courrier électronique, et

- l'acheminement d'un résumé de ladite analyse d'ensembles de données d'historique vers ledit serveur de courrier électronique (81) de façon à éventuellement actualiser lesdites listes "légitimes ou malveillantes".

6. Un procédé selon la revendication 5, dans lequel lesdits résultats de ladite analyse d'ensembles de données d'historique sont basés sur la détermination d'un niveau de potentialité de courrier indésirable pour chaque adresse d'origine.

7. Un procédé selon la revendication 5, dans lequel lesdits résultats de l'analyse d'ensembles de données d'historique sont basés sur une détermination d'un niveau de caractère erratique pour chaque adresse d'origine.

8. Un procédé selon la revendication 5, dans lequel ladite détermination du niveau de caractère erratique porte sur une prédiction d'une modification future possible d'un comportement d'une adresse d'origine spécifique.

5

Machine Learning
Classifier

HDS Instances

4

Historical Data Set
Generator

Spammer
Addresses

Email

Service

Provider

Email
Logs

3

Email Logs

Internet Connection

Black List

Accepted Mails

Mail Server Content
Based Filter

1

2

Fig. 1

Fig. 2

Fig. 3

| # | IP | T | AE | Spam Class |
|---|---|---|---|---|
| 1 | IP1 | 1 | 6 | 0 |
| 2 | IP1 | 1.5 | 2 | 0 |
| 3 | IP1 | 2.8 | 3 | 1 |
| 4 | IP1 | 4.1 | 0 | 0 |
| 5 | IP1 | 5.5 | 2 | 0 |
| 6 | IP1 | 6.3 | 2 | 0 |
| 7 | IP1 | 7.1 | 57 | 1 |
| 8 | IP1 | 7.9 | 48 | 1 |
| 9 | IP3 | 9 | 53 | 1 |
| 10 | IP2 | 11 | 2 | 0 |

Fig. 4

| Features | Period window | | | | |
|---|---|---|---|---|---|
| | 1 | 2 | 3 | 4 | 5 |
| BehaviorChanges | 0.018 | 0.027 | 0.038 | 0.051 | 0.060 |
| EmailsSent | 0.036 | 0.043 | 0.051 | 0.058 | 0.062 |
| PT_Mean | 0.004 | 0.008 | 0.016 | 0.025 | 0.040 |
| PT_Sum | 0.006 | 0.012 | 0.022 | 0.036 | 0.054 |
| PT_variance | 0.007 | 0.013 | 0.021 | 0.032 | 0.043 |
| NR_Mean | 0.004 | 0.007 | 0.012 | 0.019 | 0.030 |
| NR_Sum | 0.009 | 0.016 | 0.028 | 0.044 | 0.064 |
| NR_Variance | 0.001 | 0.002 | 0.004 | 0.006 | 0.011 |
| SpamClass_Mean | 0.009 | 0.017 | 0.029 | 0.046 | 0.065 |
| SpamClass_Sum | 0.008 | 0.015 | 0.026 | 0.042 | 0.060 |
| SpamClass_Variance | 0.006 | 0.012 | 0.022 | 0.037 | 0.057 |

## Fig. 5

| IP | T0 | Feature Sets | | | Emerging Behavior |
|---|---|---|---|---|---|
| IP1 | 1 | $FS_{IP1,1,1}$ | . . . | $FS_{IP1,1,n}$ | $Class_{IP1,1}$ |
| IP2 | 1 | $FS_{IP2,1,1}$ | . . . | $FS_{IP2,1,n}$ | $Class_{IP2,1}$ |
| IP1 | 2 | $FS_{IP1,2,1}$ | . . . | $FS_{IP1,2,n}$ | $Class_{IP1,2}$ |
| IP2 | 2 | $FS_{IP2,2,1}$ | . . . | $FS_{IP2,2,n}$ | $Class_{IP2,2}$ |
| . | | | | | |
| . | | | | | |
| . | | | | | |

## Fig. 6

| IP | T$_0$ | [T$_{-8}$, T$_0$) | | [T$_{-4}$, T$_0$) | | [T$_{-2}$, T$_0$) | | [T$_{-1}$, T$_0$) | | [T$_0$, T$_{+4}$) |
| | | EC | AE | EC | AE | EC | AE | EC | AE | Spammingness |
|---|---|---|---|---|---|---|---|---|---|---|
| IP1 | 2 | - | - | - | - | 2 | 8 | 1 | 2 | 0.333 |
| IP1 | 4 | - | - | 3 | 11 | 1 | 3 | 0 | 0 | 0.200 |
| IP1 | 6 | - | - | 3 | 5 | 2 | 8 | 1 | 2 | 0.400 |
| IP1 | 8 | 8 | 120 | 5 | 109 | 3 | 107 | 2 | 105 | 0.500 |

# Fig. 7

| Section | SRM | Machine Learning Algorithm | Batch frequency | W0 | n | Tpred | History size | BLT | WLT | Performance metrics |
|---|---|---|---|---|---|---|---|---|---|---|
| 7.1 | Heuristic | Naive Bayes, C4.5, Logistic, Regression, BayesNet | continuous | n/a | n/a | n/a | 640m | 0.66 | 0.05 | % Error, TPR, FPR, AUC, BL size, WL hits |
| | HDS-Based Spamming-ness | | | 10m | 7 | 240m | | | | |
| | HDS-Based Erraticness | | | | | | | | | |
| | EL-Based | | | n/a | n/a | n/a | n/a | | | |
| 7.2 | Heuristic | BayesNet | 1/1 min, 1/2 min, 1/5 min, 1/20 min, 1/60 min, | n/a | n/a | n/a | 240m | | | |
| | HDS-Based Spamming-ness | | | 15m | 5 | 60m | | | | |
| | HDS-Based Erraticness | | | | | | | | | |
| | EL-Based | | | n/a | n/a | n/a | n/a | | | |
| 7.3 | HDS-Based Erraticness | BayesNet | continuous | 10s | 1...12 | 60m | 341m | | | |

# Fig. 8

| SRM | ML Classifier | %Error | TPR | FPR | BL Size | AUC |
|---|---|---|---|---|---|---|
| Heuristic | N/A | **2.88** | **0.751** | **0.0005** | **45811** | **0.875** |
| HDS – Based Spammingness | BayesNet | **1.24** | **0.899** | **0.0010** | **49330** | **0.949** |
| | C4.5 | 11.22 | 0.015 | **0.0000** | 14 | 0.508 |
| | Logistic Regression | 11.20 | 0.017 | **0.0000** | 31 | 0.508 |
| | Naïve Bayes | **1.05** | **0.918** | **0.0013** | **50938** | **0.958** |
| HDS – Based Errathicness | BayesNet | **0.94** | **0.928** | **0.0013** | **52247** | **0.963** |
| | C4.5 | **0.80** | **0.940** | **0.0014** | **52261** | **0.970** |
| | Logistic Regression | **0.80** | **0.940** | **0.0014** | **52258** | **0.970** |
| | Naïve Bayes | **0.96** | **0.925** | **0.0012** | **52200** | **0.962** |
| EL-Based | BayesNet | **5.28** | **0.867** | 0.0426 | **51394** | **0.912** |
| | C4.5 | **2.55** | **0.867** | **0.0117** | **51439** | **0.928** |
| | Logistic Regression | 11.38 | 0.001 | **0.0000** | 62 | 0.600 |
| | Naïve Bayes | **5.90** | **0.730** | 0.0318 | **4209** | **0.849** |

# Fig. 9

| Windows (n) | 1 | 2 | 3 | 4 | 5 | 6 | 7 | 8 | 9 | 10 | 11 | 12 |
|---|---|---|---|---|---|---|---|---|---|---|---|---|
| Length (sec) | 10 | 20 | 40 | 80 | 160 | 320 | 640 | 1,280 | 2,560 | 5,120 | 10,240 | 20,480 |
| Error rate | 0.307 | 0.238 | 0.168 | 0.116 | 0.062 | 0.042 | 0.023 | 0.014 | 0.015 | 0.014 | 0.015 | 0.016 |
| FPR | 0.343 | 0.265 | 0.185 | 0.125 | 0.064 | 0.041 | 0.018 | 0.007 | 0.006 | 0.002 | 0.001 | 0.001 |
| TPR | 0.974 | 0.970 | 0.965 | 0.959 | 0.953 | 0.949 | 0.941 | 0.928 | 0.909 | 0.896 | 0.878 | 0.866 |
| BL size | 53,549 | 53,470 | 53,391 | 53,350 | 53,362 | 53,342 | 53,353 | 53,553 | 54,679 | 58,128 | 64,261 | 74,339 |
| WL Hits | 621K | 623K | 610K | 586K | 565K | 532K | 458K | 421K | 360K | 320K | 271K | 213K |
| AUC | 0.816 | 0.853 | 0.890 | 0.917 | 0.944 | 0.954 | 0.961 | 0.961 | 0.952 | 0.947 | 0.939 | 0.933 |

## Fig. 10

Prior Art

Fig. 11

EP 2 665 230 B1

Fig. 12

Fig. 13

EP 2 665 230 B1

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050076084 A1

**Non-patent literature cited in the description**

- **A. RAMACHANDRAN ; N. FEAMSTER ; S. VEMPALA.** *ACM CCS,* 2007, 342-351
- **J. BALTHROP ; S. FORREST ; M. E. J. NEWMAN ; M. M. WILLIAMSON.** Technological networks and the spread of computer viruses. *Science,* 2004, vol. 304 (5670), 527-529
- **P. BOYKIN ; V. ROYCHOWDHURY.** Leveraging social networks to fight spam. *IEEE Computer,* 2005, vol. 38 (4), 61-68
- **J. GOLBECK ; J. HENDLER.** Reputation network analysis for email filtering. *First Conference on Email and Anti-Spam,* 2004
- **R. BEVERLY ; K. SOLLINS.** Exploiting the transport-level characteristics of am. *5th Conference on Email and Anti-Spam (CEAS),* 2008